Europäisches Patentamt

European Patent Office

Office européen des brevets

(11) Veröffentlichungsnummer: **0 198 205**
**B1**

(12) # EUROPÄISCHE PATENTSCHRIFT

(45) Veröffentlichungstag der Patentschrift:
31.05.89

(51) Int. Cl.⁴: **C07F 7/18**

(21) Anmeldenummer: 86103070.8

(22) Anmeldetag: 07.03.86

(54) **Verfahren zur Herstellung von Organosilylcarbonaten.**

(30) Priorität: 08.03.85 DE 3508363

(43) Veröffentlichungstag der Anmeldung:
22.10.86 Patentblatt 86/43

(45) Bekanntmachung des Hinweises auf die Patenterteilung:
31.05.89 Patentblatt 89/22

(84) Benannte Vertragsstaaten:
AT BE CH DE FR GB IT LI NL SE

(56) Entgegenhaltungen:
FR-A- 2 148 772

CHEMICAL ABSTRACTS, Band 78, Nr. 5, 5. Februar 1973,
Seite 515, Nr. 29878p, Columbus, Ohio, US; MIRONOV,
V.F.: "Synthesis of bis(organosilyl) carbonates" & ZH.
OBSHCH. KHIM. 1972, 42(9), 2118
METHODEN DER ORGANISCHEN CHEMIE, 4. Auflage,
Band XIII/5, Organo-Silicium-Verbindungen, 1980,
Seiten 172-173, Georg Thieme Verlag, Stuttgart, New
York
J. ORG. CHEM., Band 36, Nr. 20, 1971, Seiten 2954-2956,
Washington D.C., US; Y. YAMAMOTO et al.: "The
preparation and reaction of tert-butyl trimethylsilyl
carbonate and related compounds"

(73) Patentinhaber: WACKER-CHEMIE GMBH,
Prinzregentenstrasse 22, D-8000 München 22(DE)

(72) Erfinder: Müller, Johann, Friedrich-Ebert-Strasse 3,
D-8263 Burghausen(DE)
Erfinder: Trieschmann, Christa, Dr. Dipl.-Chem.,
Stadtplatz 95/96, D-8263 Burghausen(DE)
Erfinder: Doskocil, Walter, Wacker-Strasse 56,
D-8263 Burghausen(DE)
Erfinder: Preiner, Gerhard, Dr. Dipl.-Chem.,
Karl-Gross-Strasse 17, D-8263 Burghausen(DE)

## Beschreibung

Verfahren zur Herstellung von Organosilylcarbonaten sind bereits bekannt. Hierzu wird auf W.C. Butts und Mitarbeiter in Analytical Chemistry, Vol. 43, No. 4, 1971, Seite 538 bis 542, und Y. Yamamoto und Mitarbeiter in Journal of Organic Chemistry, Vol. 36, No. 20, 1971, Seite 2954 bis 2956 verwiesen. In letzterem wird ein Verfahren zur Herstellung von tert.-Butyl-trimethylsilylcarbonat und analogen gemischten Alkyl-trimethylsilylestern der Kohlensäure durch Umsetzung von Trimethylchlorsilan mit Natrium-tert.-Butylcarbonat bzw. entsprechenden Natrium-Alkylcarbonaten beschrieben.

Es bestand nun die Aufgabe, ein auch in größerem Umfang verhältnismäßig leicht durchführbares Verfahren zur Herstellung von Organosilylcarbonaten, insbesondere Bistriorganosilylcarbonaten, aus verhältnismäßig leicht zugänglichen Ausgangsstoffen bereitzustellen. Diese Aufgabe wird durch die Erfindung gelöst.

Gegenstand der Erfindung ist ein Verfahren zur Herstellung von Organosilylcarbonaten der Formel

$$R_3SiOCOOSiR_3$$

worin R gleiche oder verschiedene einwertige gegebenenfalls substituierte Kohlenwasserstoffreste mit 1 bis 18 Kohlenstoffatome(n) je Rest bedeutet, dadurch gekennzeichnet, daß Triorganochlorsilan der Formel

$$R_3SiCl,$$

worin R die oben dafür angegebene Bedeutung hat, mit Alkalihydrogencarbonat und Amin oder Phosphin oder Amin und Phosphin, wobei solche Amine und Phosphine eingesetzt werden, die Chlorwasserstoff unter Bildung von Ammoniumchloriden bzw. Phosphoniumchloriden binden, in gegenüber den Reaktionsteilnehmern inertem, aprotischem Lösungsmittel umgesetzt wird, die so erhaltene Mischung vom Ammonium- bzw. Phosphoniumchlorid befreit wird und aus der vom Chlorid befreiten Mischung das Organosilylcarbonat isoliert wird.

In Abwesenheit von Amin oder Phosphin werden aus Triorganohalogensilan und Natriumhydrogencarbonat als einzige Organosiliciumverbindungen Triorganosilanol bzw. Hexaorganodisiloxan gebildet (vgl. W. Noll "Chemie und Technologie der Silicone", Weinheim 1968, Seite 168).

Die Reste R sind Kohlenwasserstoffreste mit 1 bis 18 Kohlenstoffatomen je Rest, wie Alkylreste, z.B. der Methyl-, Ethyl-, n-Propyl-, n-Butyl- und sec.-Butylrest sowie Octadecylreste; Cycloalkylreste, wie der Cyclohexylrest; Kohlenwasserstoffreste mit 2 bis 18 Kohlenstoffatomen je Rest und aliphatischen Kohlenstoff-Kohlenstoff-Mehrfachbindungen, z.B. der Ethinyl-, Vinyl-, Allyl- und Methallylrest sowie Styrylreste; Arylreste, z.B. der Phenylrest; Alkarylreste, wie Tolylreste; und Aralkylreste, z.B. der Benzylrest.

Diese Kohlenwasserstoffreste können gegenüber Si-gebundenem Chlor und Alkalihydrogencarbonat inerte Substituenten aufweisen. Beispiele für derartige substituierte Kohlenwasserstoffreste sind halogenierte, einwertige Kohlenwasserstoffreste, wie der 3-Chlorpropyl-, 3,3,3-Trifluorpropylrest, o-, p- und m-Chlorphenylrest sowie Bromtolylreste; aus Kohlenstoff-, Wasserstoff-, Ethersauerstoff- und Fluoratom(en) aufgebaute, einwertige aliphatische Reste, wie der 1,1,2,2,3,3-Hexafluorpropyloxypropylrest und der 1,1,2,2,-Tetrafluorethoxypropylrest, und Ethersauerstoff als einzigen Substituenten enthaltende, einwertige Kohlenwasserstoffreste, wie der p-Methoxyphenylrest.

Besonders bevorzugt als bei dem erfindungsgemäßen Verfahren eingesetzte Triorganochlorsilane sind Trimethylchlorsilan und Vinyldimethylchlorsilan.

Wegen der leichten Zugänglichkeit ist als Alkalihydrogencarbonat Natriumhydrogencarbonat besonders bevorzugt. Es kann aber auch z.B. Kaliumhydrogencarbonat oder Lithiumhydrogencarbonat verwendet werden.

Vorzugsweise wird bei dem erfindungsgemäßen Verfahren Alkalihydrogencarbonat in Mengen von mindestens 1 Mol je Grammatom Si-gebundenen Halogens, insbesondere in Mengen von 3 bis 5 Mol je Grammatom Si-gebundenen Halogens, eingesetzt.

Als Amine oder Phosphine können beliebige Verbindungen dieser Art eingesetzt werden, die Chlorwasserstoff unter Bildung von Ammoniumchloriden bzw. Phosphoniumchloriden binden.

Wegen der geringen Toxizität sind Amine gegenüber Phosphinen bevorzugt.

Als Amine sind solche, die bei Raumtemperatur flüssig sind und einen Siedepunkt von höchstens 50°C bei 150 hPa (abs.) haben insbesondere Hexamethyldisilazan und Triethylamin, bevorzugt. Weitere Beispiele für bei dem erfindungsgemäßen Verfahren einsetzbare Amine sind Cyclohexylamin, Piperidin, Pyridin, Chlorethyldimethylamin und n-Butylamin.

Als Beispiel für ein bei dem erfindungsgemäßen Verfahren einsetzbares Phosphin sei Tri-n-butylphosphin genannt.

Amin und/oder Phosphin wird bei dem erfindungsgemäßen Verfahren vorzugsweise in Mengen von insgesamt mindestens 1 Mol je Grammatom Si-gebundenen Halogens, insbesondere in Mengen von 3 bis 5 Mol je Grammatom Si-gebundenen Halogens, eingesetzt.

Als gegenüber den Reaktionsteilnehmern inerte, aprotische Lösungsmittel sind solche, die polar sind und einen Siedepunkt von höchstens 50°C bei 150 hPa (abs.) haben, bevorzugt. Es kann sich bei diesen Lösungsmitteln beispielsweise um polare Halogenkohlenwasserstoffe, wie Dichlormethan, oder Ether, wie Diethylether, handeln. Insbesondere wegen der leichteren Handhabbarkeit ist Dichlormethan als Lösungsmittel, in dem die Umsetzung von Triorganochlorsilan mit Alkalihydrogencarbonat und Amin und/oder Phosphin durchgeführt wird, besonders bevorzugt.

Vorzugsweise wird gegenüber den Reaktionsteilnehmern inertes, aprotisches Lösungsmittel in Mengen von 100 bis 1200 Gewichtsprozent, bezogen auf das Gewicht des jeweils eingesetzten Organohalogensilans, verwendet.

Die Umsetzung von Triorganochlorsilan mit Alkalihydrogencarbonat und Amin und/oder Phosphin erfolgt durch bzw. bei dem Vermischen der Reaktionsteilnehmer. Vorzugsweise wird sie bei 10° bis 50°C und beim Druck der umgebenden Atmosphäre, also bei 1020 hPa (abs.) oder etwa 1020 hPa (abs.) durchgeführt.

Zur Befreiung der durch Umsetzung von Triorganochlorsilan mit Alkalihydrogencarbonat und Amin oder Phosphin oder Amin und Phosphin in gegenüber den Reaktionsteilnehmern inertem, aprotischem Lösungsmittel erhaltenen Mischung vom Ammonium- bzw. Phosphoniumhalogenid wird diese Mischung vorzugsweise mit einem gegenüber den Reaktionsprodukten inerten aprotischen und unpolaren Lösungsmittel vermischt, um ein möglichst vollständiges Ausfallen des Ammonium- bzw. Phosphoniumhalogenids zu bewirken, von dem dann abfiltriert, abdekantiert oder abzentrifugiert wird. Dabei sind als unpolare Lösungsmittel Kohlenwasserstoffe mit einem Siedepunkt von höchstens 50°C bei 150 hPa (abs.), insbesondere n-Hexan, bevorzugt.

Vorzugsweise wird unpolares Lösungsmittel, wenn es eingesetzt wird, in Mengen von 100 bis 1000 Gewichtsprozent, bezogen auf das Gewicht des zur Herstellung des gewünschten Organosilylcarbonats eingesetzten Organohalogensilans, verwendet.

Auch die Befreiung der durch Umsetzung vom Triorganochlorsilan mit Alkalihydrogencarbonat und Amin und/oder Phosphin in gegenüber den Reaktionsteilnehmern inertem, aprotischem Lösungsmittel erhaltenen Mischung vom Ammonium- bzw. Phosphoniumhalogenid wird vorzugsweise bei 10° bis 50°C und beim Druck der umgebenden Atmosphäre, also bei 1020 hPa (abs.) oder etwa 1020 hPa (abs.), durchgeführt.

Das Isolieren des gewünschten Organosilylcarbonats der Formel

$R_3SiOCOOSiR_3$

worin R die oben dafür angegebene Bedeutung hat, erfolgt vorzugsweise durch Abdampfen von Lösungsmittel, überschüssigem Amin und/oder Phosphin und anderen niedriger als das gewünschte Organosilylcarbonat siedenden Stoffen bei höchstens 50°C und höchstens 150 hPa (abs.).

Vorzugsweise wird bei dem erfindungsgemäßen Verfahren der Zutritt von Wasser, soweit möglich, ausgeschlossen.

Die erfindungsgemäß hergestellten Organosilylcarbonate können z.B. zur Hydrophobierung von pyrogen erzeugtem Siliciumdioxyd oder zur Silylierung von Aminosäuren (vgl. Y. Yamamoto und Mitarbeiter in Journal of Organic Chemistry, Vol. 38, No. 14, 1973, Seite 2521 bis 2525) verwendet werden.

Beispiel 1

a) Zu einem Gemisch aus 134 g Natriumhydrogencarbonat (Reinheit: mindestens 99,5 Gewichtsprozent NaHCO₃), 162 g wasserfreiem Triethylamin und 100 g Dichlormethan (Reinheit: mindestens 99,5 Gewichtsprozent CH₂Cl₂) in einem mit Rührer, Tropftrichter, Thermometer und Rückflußkühler ausgestatteten Kolben wird unter Rühren und Ausschluß von Wasser eine Lösung von 43,6 g Trimethylchlorsilan in 40 g Dichlormethan (Reinheit: mindestens 99,5 Gewichtsprozent CH₂Cl₂) innerhalb von 30 Minuten tropfenweise gegeben. Dabei steigt die Temperatur des Inhalts des Kolbens auf etwa 40°C. Nach Beendigung der Zugabe von Silan in aprotischem Lösungsmittel wird noch 2 Stunden gerührt, wobei sich der Inhalt des Kolbens auf Raumtemperatur abkühlt. Die Organosiliciumverbindungen einer Probe der so erhaltenen Mischung bestehen aufgrund des ¹H-NMR-Spektrums zu 81 Molprozent aus Bis-(trimethylsilyl)-carbonat und zu 19 Molprozent aus Hexamethyldisiloxan.

b) Die wie vorstehend unter a) beschrieben hergestellte Mischung wird mit 1000 g wasserfreiem n-Hexan vermischt und unter trockenem Stickstoff filtriert. Aus dem Filtrat werden bei Raumtemperatur und bis 10 hPa (abs.) die niedriger als Bis-(trimethylsilyl)-carbonat siedenden Stoffe abdestilliert, wobei als Rückstand Bis-(trimethylsilyl)-carbonat in Menge von 56,6 g erhalten wird.

Beispiel 2

a) Zu einem Gemisch aus 11,9 g Kaliumhydrogencarbonat (Reinheit: mindestens 99,5 Gewichtsprozent KHCO₃), 16,2 g wasserfreiem Triethylamin und 10 g Dichlormethan (Reinheit: mindestens 99,5 Gewichtsprozent CH₂Cl₂) in einem mit Rührer, Tropftrichter, Thermometer und Rückflußkühler ausgestattetem Kolben wird unter Rühren und Ausschluß von Wasser eine Lösung von 4,4 g Trimethylchlorsilan in 5 g Dichlormethan (Reinheit: mindestens 99,5 Gewichtsprozent CH₂Cl₂) innerhalb von 5 Minuten tropfenweise gegeben. Dabei steigt die Temperatur des Kolbeninhalts auf etwa 30°C. Nach Beendigung der Zugabe von Silan in aprotischem Lösungsmittel wird noch 2 Stunden gerührt, wobei sich der Inhalt des Kolbens auf Raumtemperatur abkühlt. Die Organosiliciumverbindungen einer Probe der so erhaltenen Mischung bestehen aufgrund des ¹H-NMR-Spektrums zu 65 Molprozent aus Bis-(trimethylsilyl)-carbonat und zu 35 Molprozent aus Hexamethyldisiloxan.

b) Die wie vorstehend unter a) beschrieben hergestellte Mischung wird mit 200 g wasserfreiem n-Hexan vermischt und unter trockenem Stickstoff filtriert. Aus dem Filtrat werden bei Raumtemperatur und bis 10 hPa (abs.) die niedriger als Bis-(trimethylsilyl)-carbonat siedenden Stoffe abdestilliert wobei als Rückstand Bis-(trimethylsilyl)-carbonat in einer Menge von 3,3 g erhalten wird.

Beispiel 3

a) Zu einem Gemisch aus 67,2 g Natriumhydrogencarbonat (Reinheit: mindestens 99,5 Gewichtsprozent NaHCO₃), 162 g wasserfreiem Triethylamin und 100 g Dichlormethan (Reinheit: mindestens 99,5 Gewichtsprozent CH₂Cl₂) in einem mit Rührer, Tropftrichter, Thermometer und Rückflußkühler ausgestattetem Kolben wird unter Rühren und Ausschluß von Wasser eine Lösung von 24,1 g Vinyldimethylchlorsilan in 24 g Dichlormethan (Reinheit: mindestens 99,5 Gewichtsprozent CH₂Cl₂) innerhalb von 15 Minuten tropfenweise gegeben. Nach beendigung der Zugabe von Silan in aprotischem Lösungsmittel wird noch 3,5 Stunden gerührt. wonach die Organosiliciumverbindungen einer Probe der so erhaltenen Mischung aufgrund des ${}^1$H-NMR-Spekrums zu 55 Molprozent aus Bis-(vinyldimethylsilyl)-carbonat und zu 45 Molprozent aus 1,3 Divinyl-1,1,3,3-tetramethyldisiloxan bestehen.

b) Die wie vorstehend unter a) beschrieben hergestellte Mischung wird mit 500 g wasserfreiem n-Hexan vermischt und unter trockenem Stockstoff filtriert. Aus dem Filtrat werden bei Raumtemperatur bis 50°C und 10 hPa (abs.) die niedriger als Bis-(vinyldimethylsilyl)-carbonat siedende Stoffe abdestilliert, wobei als Rückstand Bis-(vinyldimethylsilyl)-carbonat in einer Menge von 15,4 g als klares, gelbliches Öl erhalten wird.

### Beispiel 4

a) Zu einem Gemisch aus 672 g Natriumhydrogencarbonat (Reinheit: mindestens 99,5 Gewichtsprozent $NaHCO_3$), 1780 g Dichlormethan (Reinheit: mindestens 99,5 Gewichtsprozent $CH_2Cl_2$0 und 966 g Hexamethyldisilazan in einem mit Rührer, Tropftrichter, Thermometer und Rückflußkühler ausgestattetem Kolben wird unter Rühren und Ausschluß von Wasser eine Lösung von 217 g Trimethylchlorsilan in 220 g Dichlormethan (Reinheit: mindestens 99,5 Gewichtsprozent $CH_2Cl_2$) innerhalb von 90 Minuten tropfenweise gegeben. Nach Beendigung der Zugabe von Silan in aprotischem Lösungsmittel wird noch 45 Stunden gerührt und dann unter trockenem Stickstoff filtriert. Aus dem Filtrat werden bei 30°C und bis 10 hPa (abs.) die niedriger als Bis-(trimethylsilyl)-carbonat siedenden Stoffe abdestilliert, wobei als Rückstand Bis-(trimethylsilyl)-carbonat in einer Menge von 370 g (90 Gewichtsprozent d. Th.) erhalten wird.

### Patentansprüche

1. Verfahren zur Herstellung von Organosilylcarbonaten der Formel

$R_3SiOCOOSiR_3$

worin R gleiche oder verschiedene einwertige gegebenenfalls substituierte Kohlenwasserstoffreste mit 1 bis 18 Kohlenstoffatome(n) je Rest bedeutet, dadurch gekennzeichnet, daß Triorganochlorsilan der Formel

$R_3SiCl$,

worin R die oben dafür angegebene Bedeutung hat, mit Alkalihydrogencarbonat und Amin oder Phosphin oder Amin und Phosphin, wobei solche Amine und Phosphine eingesetzt werden, die Chlorwasserstoff unter Bildung von Ammoniumchloriden bzw. Phosphoniumchloriden binden, in gegenüber den Reaktionsteilnehmern inertem, aprotischem Lösungsmittel umgesetzt wird, die so erhaltene Mischung vom Ammonium- bzw. Phosphoniumchlorid befreit wird und aus der vom Chlorid befreiten Mischung das Organosilylcarbonat isoliert wird.

2. Verfahren nach Anspruch 1, dadurch gekennzeichnet, daß als Triorganochlorsilan Trimethylchlorsilan verwendet wird.

3. Verfahren nach Anspruch 1, dadurch gekennzeichnet, daß als Triorganochlorsilan Vinyldimethylchlorsilan verwendet wird.

4. Verfahren nach mindestens einem der Ansprüche 1 bis 3, dadurch gekennzeichnet, daß als Alkalihydrogencarbonat Natriumhydrogencarbonat verwendet wird.

5. Verfahren nach mindestens einem der Ansprüche 1 bis 4, dadurch gekennzeichnet, daß Alkalihydrogencarbonat in Mengen von 3 bis 5 Mol je Grammatom Si-gebundenen Chlors eingesetzt wird.

6. Verfahren nach mindestens einem der Ansprüche 1 bis 5, dadurch gekennzeichnet, daß als Amin Hexamethyldisilazan oder Triethylamin verwendet wird.

7. Verfahren nach mindestens einem der Ansprüche 1 bis 6, dadurch gekennzeichnet, daß Amin und/oder Phosphin in Mengen von 3 bis 5 Mol je Grammatom Si-gebundenen Chlors eingesetzt wird.

### Claims

1. A process for the preparation of organosilyl carbonates of the formula

$R_3SiOCOOSiR_3$

in which R denotes identical or different monovalent substituted or unsubstituted hydrocarbon radicals having 1 to 18 carbon atoms per radical, characterized in that a triorganochlorosilane of the formula

$R_3SiCl$,

in which R has the abovementioned meaning, is reacted with an alkali metal bicarbonate and an amine or phosphine or an amine and phosphine, those amines and phosphines being used which bind hydrogen chloride with the formation of ammonium chloride or phosphonium chloride, in an aprotic solvent which is inert toward the reactants, the mixture thus obtained is freed from the ammonium or phosphonium chloride and the organosilyl carbonate is isolated from the mixture which has been freed from the chloride.

2. Process according to claim 1, characterized in that the triorganochlorosilane used is trimethylchlorosilane.

3. Process according to claim 1, characterized in that the triorganochlorosilane used is vinyldimethylchlorosilane.

4. Process according to at least one of claims 1 to 3, characterized in that the alkali metal bicarbonate used is sodium bicarbonate.

5. Process according to at least one of claims 1 to 4, characterized in that the alkali metal bicarbonate is used in amounts of 3 to 5 mol per gram atom of Si-bound chlorine.

6. Process according to at least one of claims 1 to 5, characterized in that the amine used is hexamethyldisilazane or triethylamine.

7. Process according to at least one of claims 1 to 6, characterized in that the amine and/or phosphine is used in amounts of 3 to 5 mol per gram atom of Si-bound chlorine.

**Revendications**

1. Procédé pour préparer des carbonates d'organosilyles répondant à la formule:

R₃SiOCOOSiR₃

dans laquelle les R représentent chacun, indépendamment les uns des autres, un radical hydrocarboné univalent, éventuellement substitué, qui contient de 1 à 18 atomes de carbone, procédé caractérisé en ce qu'on fait réagir un triorgano-chloro-silane répondant à la formule:

R₃SiCl

dans laquelle R a la signification qui vient de lui être attribuée, avec un hydrogénocarbonate de métal alcalin et une amine ou une phosphine ou une amine et une phosphine, ces amines et phosphines étant utilisées pour fixer le chlorure d'hydrogène en formant respectivement des chlorures d'ammoniums ou des chlorures de phosphoniums, dans un solvant aprotique inerte à l'égard des corps qui prennent part à la réaction, on élimine du mélange ainsi obtenu le chlorure d'ammonium et/ou le chlorure de phosphonium, et, à partir du mélange débarrassé du chlorure, on isole le carbonate d'organosilyle.

2. Procédé selon la revendication 1 caractérisé en ce qu'on utilise, comme triorgano-chloro-silane, le triméthyl-chloro-silane.

3. Procédé selon la revendication 1, caractérisé en ce qu'on utilise, comme triorgano-chloro-silane, le vinyl-diméthyl-chloro-silane.

4. Procédé selon l'une quelconque des revendications 1 à 3, caractérisé en ce qu'on utilise, comme hydrogénocarbonate de métal alcalin, l'hydrogénocarbonate de sodium.

5. Procédé selon l'une quelconque des revendications 1 à 4, caractérisé en ce que l'hydrogénocarbonate de métal alcalin est mis en jeu en une quantité de 3 à 5 mol par atome-gramme de chlore lié à Si.

6. Procédé selon l'une quelconque des revendications 1 à 5, caractérisé en ce qu'on utilise, comme amine, l'hexaméthyl-disilazane ou la triéthylamine.

7. Procédé selon l'une quelconque des revendications 1 à 6, caractérisé en ce qu'on utilise l'amine et/ou la phosphine en des quantités de 3 à 5 mol par atome-gramme de chlore lié à Si.